# FASCICULE DE BREVET EUROPEEN

(11) **EP 1 302 859 B1**
(45) Date de publication et mention de la délivrance du brevet: **29.12.2010**
(21) Numéro de dépôt: 02292321.3
(22) Date de dépôt: 20.09.2002
(51) Int. Cl.: G06F 13/40

(54) **Insertion à chaud d'une carte électronique dans un système d'ordinateur**
Einstecken unter Spannung von einer elektronischen Karte in ein Rechnersystem
Hot insertion of logic boards in a computer system

(30) Priorité: 26.09.2001 FR 0112353
(43) Date de publication de la demande: 16.04.2003
(73) Titulaire: Bull SAS, 78340 Les Clayes-sous-Bois (FR)
(72) Inventeur: Lecourtier, Georges, 78000 Versailles (FR)
(74) Mandataire: Pellegrini, Marie Claude

(56) Documents cités:
- EP-A- 0 752 668
- US-A- 4 200 865
- US-A- 5 210 855
- US-A- 6 154 798

## Description

### Domaine technique.

La présente invention se rapporte à l'insertion à chaud d'une carte électronique dans un système. L'insertion à chaud se dit lorsqu'une carte dans un système sous tension et opérationnel est ajoutée ou remplacée pendant le fonctionnement du système. Cette fonction est connue dans la littérature anglo-saxonne sous les vocables de fonction de "hot-plug" ou "hot-swap".

La présente invention a pour objet principal un procédé de gestion de l'insertion à chaud d'une carte électronique dans un système. Elle a pour objets corollaires un détecteur d'insertion à chaud d'une carte électronique dans un système, ainsi qu'une carte et un système mettant en oeuvre le détecteur et/ou le procédé de gestion conformes à l'invention.

L'invention concerne tout type de système électronique incluant au moins une carte électronique. Elle est adaptée notamment à une carte incorporant au moins un microprocesseur dans un système informatique ou de télécommunications et plus particulièrement à une telle carte servant à l'administration du système.

### L'art antérieur.

Actuellement, les utilisateurs de systèmes de traitement de l'information ou de télécommunications imposent de plus en plus souvent de pouvoir faire une insertion à chaud d'une carte additionnelle ou en remplacement d'une carte défectueuse. Sans cette fonction, le système doit être arrêté et redémarré. L'arrêt est souvent fortement dommageable pour le propriétaire et les utilisateurs du système. En outre, l'arrêt et le démarrage sont des opérations qui nécessitent le recours à des spécialistes et qui sont coûteuses en temps et en argent. Un exemple sera d'abord donné d'une insertion à chaud dans un petit système, tel qu'un ordinateur personnel ou un serveur informatique, puis dans un grand système, dont les difficultés mettront bien en relief les caractéristiques et avantages de la présente invention.

Un mode courant d'insertion à chaud dans un petit ordinateur est le changement d'une carte fille connectée à une carte mère. Actuellement, dans ce genre d'ordinateur la carte fille est ordinairement une carte PCI (Peripheral Component Interconnect) représentative d'un contrôleur d'entrée-sortie connecté au système par un bus PCI. Le dispositif d'insertion à chaud comprend des commutateurs électroniques montés sur la carte mère et agissant sur chacun des signaux d'interface et sur chacune des alimentations de la carte fille. Le procédé de gestion de l'insertion à chaud commence par actionner ces commutateurs de façon à isoler complètement, du point de vue électrique, la carte mère de la carte fille pendant les opérations cruciales de désinsertion ou d'insertion de la carte fille. Les commutateurs électroniques sont commandés par le processeur central ou le processeur de maintenance du système qui sont supposés en activité normale pendant la totalité de la procédure d'insertion à chaud. Ce dispositif d'insertion fonctionne convenablement pour des cartes d'entrée-sortie du système comme les cartes PCI ou les cartes de ligne des systèmes de télécommunications. Dans ce cas, selon le procédé d'insertion, le système d'exploitation de l'ordinateur effectue, d'abord, les opérations de déconnexion logique des ressources associées aux organes d'entrée-sortie connectés à la ou les cartes filles, d'isolation de la carte défaillante et de signalisation de la défaillance à l'ingénieur de maintenance, puis, à la suite de l'échange physique de la ou des cartes filles, les opérations de remise sous tension, d'initialisation de la ou des cartes filles, de redémarrage des pilotes logiciels (drivers) et enfin de restitution des ressources dans les tables du système.

Le système qui servira d'exemple est un grand ordinateur fait d'une carte mère à laquelle est connectée au moins une carte fille d'exploitation remplissant les fonctions demandées par un utilisateur, telles que des fonctions informatiques et/ou de télécommunications, et une carte fille de gestion de la carte mère et des cartes filles d'exploitation. La carte de gestion inclut au moins un microprocesseur et des moyens matériels et/ou logiciels pour recevoir les données des autres cartes et émettre les signaux de commande requis pour l'administration du système. La carte de gestion constitue un processeur de service pour le système. Le processeur de service ne s'appuie pas sur les ressources matérielles du système principal, en particulier les processeurs du système affectés à l'utilisateur. Il est donc en mesure d'effectuer les opérations de reconfiguration et de réamorçage, sans intervention humaine immédiate. Le processeur de service est connecté à l'extérieur du système à au moins un ordinateur constituant un processeur d'administration et une interface graphique d'utilisateur pouvant être locale, ou distante pour la télémaintenance. Ce processeur d'administration gère les ressources du système par l'intermédiaire d'au moins un processeur de service, qui sert d'agent d'administration du système et constitue un élément de bas niveau de l'administration. Habituellement, des messages de vérification du bon état de marche sont échangés régulièrement entre le processeur de service et le(s) processeur(s) du système et/ou au moins un processeur distant d'administration du système. L'utilisateur administrateur du système ou l'ingénieur de maintenance peut ainsi être prévenu de toute défaillance par des messages transmis automatiquement par le processeur de service, qui précisent le numéro d'identification du système et le type de la carte incriminée. Un moment plus tard, allant de quelques minutes à quelques heures, l'insertion à chaud d'une nouvelle carte est exécutée pour restaurer l'intégrité du système et ainsi éviter que des pannes multiples conduisent à obliger l'arrêt de l'exploitation.

Un premier problème se pose lorsque le processeur de service lui-même est défaillant. En règle générale, le fonctionnement du processeur de service n'est pas indispensable à l'exploitation du système par ses utilisateurs. Mais comme sa liaison avec le processeur d'administration permet de détecter facilement s'il est défaillant, il serait regrettable d'avoir à arrêter l'exploitation du système de l'utilisateur pendant toute la durée de l'indisponibilité du processeur de service. L'insertion à chaud d'un processeur de service pose un second problème lorsqu'elle est faite selon un procédé classique d'insertion à chaud de tout autre carte électronique constituant un processeur d'exploitation dans le système. Après insertion à chaud, la remise sous tension normale du processeur de service conduit selon sa configuration initiale à l'arrêt des alimentations du système et à l'initialisation des processeurs d'exploitation, des sous-systèmes de mémoire et des cartes d'entrée-sortie. Ce problème se traduit donc par une interruption brutale de l'exploitation du système informatique. Compte tenu de ces deux problèmes, ce cas sera pris comme exemple pour illustrer l'invention.

Le document US 5 210 855 décrit un procédé tel que spécifié au préambule de la revendication 1.

### Sommaire de l'invention.

L'invention a pour premier but un procédé de gestion de l'insertion à chaud d'une carte dans un système, qui évite une redondance coûteuse du matériel de la carte et des chemins d'accès à tous les bus de gestion du système.

Un second but de l'invention est d'adapter le procédé à une carte de gestion du système, sans risque de bloquer le fonctionnement du reste du système.

Un troisième but de l'invention est de pouvoir mettre en oeuvre le procédé de façon simple, peu coûteuse et fiable.

Un premier objet de l'invention est un procédé de gestion de l'insertion à chaud d'une carte électronique dans un système tel que défini dans la revendication indépendante 1. Un deuxième objet de l'invention est un détecteur d'insertion à chaud d'une carte électronique dans un système tel que défini dans là revendication indépendante 6. D'autres modes de réalisation de l'invention sont spécifiés dans les revendications dépendantes attenantes.

L'invention a pour objet corollaire une carte électronique comprenant des moyens de connexion de la carte à deux potentiels d'alimentation extérieurs à la carte et des moyens d'insertion à chaud de la carte dans un système qui ont les fonctions définies par le procédé de l'invention ou comprennent un détecteur d'insertion à chaud tel que défini précédemment.

L'invention a aussi pour objet corollaire un système dans lequel au moins une carte peut être insérée à chaud et qui met en oeuvre le procédé de l'invention.

Les caractéristiques et avantages de l'invention ressortent clairement de la description qui suit, donnée à titre d'exemple et faite en référence aux dessins annexés.

### Présentation des dessins.

La figure 1 est une vue schématique partielle d'une structure vue de côté d'un système mettant en oeuvre le procédé de la présente invention prévu pour la gestion de l'insertion à chaud de la carte de gestion du système.
La figure 2 est une vue schématique du circuit électrique d'un exemple de détecteur d'insertion à chaud pouvant être mis en oeuvre par le procédé de l'invention.
La figure 3 est un graphe illustrant deux modes de fonctionnement du détecteur représenté sur la figure 2.
Les figure 4A-4D sont des graphes illustrant des formes d'ondes présentes en différents points du détecteur représenté sur la figure 2 lors de l'insertion à chaud de la carte de gestion.

Et la figure 5 est un organigramme illustrant un exemple de procédé d'initialisation de la carte de gestion pouvant être mis en oeuvre par le procédé de l'invention.

### Description détaillée d'exemples illustrant l'invention.

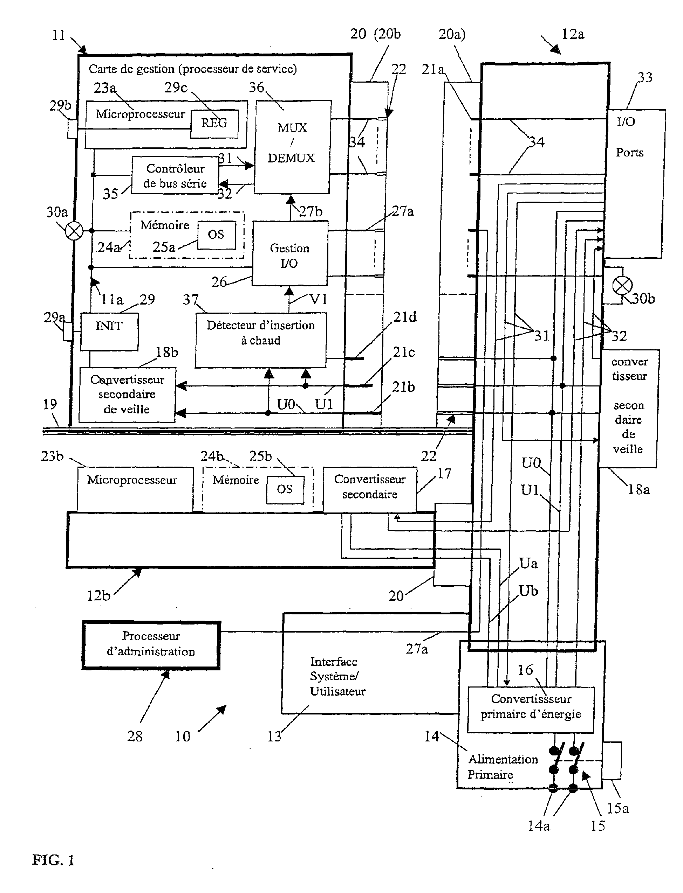

La figure 1 est une vue schématique de côté de la structure d'un grand système informatique 10. Le système choisi est tout ou partie d'un système informatique ou d'un système de télécommunications, auquel cas il est souvent appelé plate-forme. La plate-forme 10 comprend une carte 11 de gestion d'au moins une carte d'exploitation 12, à savoir une carte mère 12a et une carte fille 12b dans l'exemple illustré. La carte fille 12b sert d'unité centrale. D'autres cartes filles, non illustrées pour la simplification des dessins, peuvent constituer l'unité centrale et/ou d'autres unités, telle qu'une unité d'entrée-sortie. La carte de gestion 11 de la plate-forme 10, aussi appelée carte PMB (Platform Management Board) ou processeur de service, est aussi une carte fille pour la carte mère 12a. Dans le cadre de la présente description, la présence de la carte de gestion 11 fait que la plate-forme 10 est un grand système.

La carte mère 12a est connectée aussi à une interface 13 entre le système 10 et un utilisateur du système, et à un bloc 14 d'alimentation primaire en énergie électrique de la plate-forme 10. L'énergie électrique est reçue sur des bornes d'entrée 14a du bloc 14 et est transmise, par l'intermédiaire d'un interrupteur 15 à bouton 15a de commande de marche/arrêt général de la plate-forme, à un convertisseur primaire 16 d'énergie électrique. Le convertisseur 16 fournit une tension d'alimentation primaire faite de potentiels Ua, Ub, en l'occurrence Ua = 0 volt constituant la masse électrique de la plate-forme et Ub = 48 volts. La tension Ua, Ub est appliquée, sous la commande classique (non illustrée pour la clarté des dessins) de la carte de gestion 11, à un convertisseur secondaire d'alimentation 17 disposé sur la carte d'exploitation 12b pour fournir les tensions d'alimentation nécessaires au fonctionnement de ses composants. En pratique, la carte fille 12b et les autres cartes filles d'exploitation non illustrées d'un grand système informatique consomment une forte puissance, en l'occurrence de l'ordre de 5000 watts. Le convertisseur 16 fournit en permanence une tension d'alimentation de veille U0, U1, en l'occurrence U0 = Ua = 0 volt et U1 = 12 volts, à deux convertisseurs secondaires de veille 18a et 18b disposés respectivement sur la carte mère 12a et sur la carte de gestion 11 pour fournir les tensions nécessaires au fonctionnement des composants des cartes respectives 12a et 11. La puissance de veille est faible, de l'ordre de 50 watts.

Les cartes filles 11 et 12b peuvent être glissées sur des rails 19 (seul le rail relatif à la carte 11 est illustré) pour être connectées à la carte mère 12a par insertion dans des connecteurs électriques respectifs 20. Les connecteurs illustrés sont du type fond de panier (backpanel connector). La carte de gestion 11 est représentée en état non connecté à la carte mère 12a afin de faire ressortir la structure du connecteur 20. Le connecteur 20 se compose d'une pièce de connexion 20a solidaire de la carte mère 12a et une pièce de connexion 20b solidaire de la carte de gestion 11. La pièce 20a a une partie mâle pour la connexion des signaux logiques avec une partie femelle correspondante de la pièce 20b. La pièce 20a a aussi une partie femelle pour la transmission des potentiels d'alimentation U0 et U1 à une partie mâle correspondante de la pièce 20b. Les parties mâles portent des broches conductrices 21 disposées en correspondance avec des contacts électriques femelles respectifs 22. De façon classique, l'insertion de la carte 11 ou 12b dans le connecteur 20 correspondant se fait par des broches 21 de longueurs différentes pour obtenir une connexion séquentielle déterminée lors de l'insertion de la carte. Dans l'exemple de la carte 11 illustrée, les broches 21 comprennent : des broches 21a qui sont affectées aux signaux logiques entrant ou sortant de la carte 11 et qui sont ordinairement de taille normalisée, fines et très courtes ; au moins une broche de masse 21b, plus épaisse que les broches 21a et très longue pour assurer que le potentiel de masse U0 sera la première connexion pendant l'insertion de la carte 11 et la dernière déconnexion pendant la désinsertion de la carte 11 ; et au moins une broche de tension 21c, moins longue et ordinairement de même épaisseur que la broche de masse 21b et affectée au potentiel U1. En pratique, chaque connecteur 20 porte ordinairement une broche de masse 21b (et optionnellement une broche de tension 21c) à chacune de ses extrémités, de façon à mieux assurer qu'au moins l'une des deux broches 21b soit en contact avec la masse avant toute connexion des autres broches 21a et 21c lors de l'insertion de la carte dans le connecteur et reste en dernier en contact avec la masse lors d'une désinsertion de la carte. Pour la clarté des dessins, une seule broche de masse 21b et une seule broche de tension 21c sont illustrées. Dans le connecteur 20 affecté à la carte de gestion 11, la pièce 20b comprend aussi au moins une broche courte 21d, moins longue que la broche de tension 21c mais plus longue que les broches 21a de signaux logiques. Dans la pièce 20a, le contact femelle 22 associé à la broche courte 21d est connecté à la masse U0.

Les cartes filles 11 et 12b illustrées sont équipées chacune d'au moins un microprocesseur 23a et 23b respectif. La carte mère 12a peut aussi en avoir un. Plus généralement, il suffit pour un grand système informatique qu'il y ait un microprocesseur de service 23a dans la carte de gestion 11 et un microprocesseur d'exploitation 23b dans l'une des autres cartes 12. Les cartes filles 11 et 12b contiennent des moyens de mémoire respectifs 24a et 24b connectés aux microprocesseurs respectifs 23a et 23b. La carte mère 12a peut aussi en contenir. Les moyens de mémoire 24a, 24b sont représentés par un trait fantôme pour indiquer qu'en réalité ils sont prévus pour contenir tous les moyens logiciels mis en oeuvre dans la carte correspondante. En particulier, les moyens de mémoire 24a contiennent un système d'exploitation 25a spécialisé pour la gestion, tandis que les moyens de mémoire 24b de la carte d'exploitation 12b contiennent un système d'exploitation 25b spécialisé pour le traitement demandé par un utilisateur.

Dans la carte de gestion 11, le microprocesseur 23a est connecté à un bus 11a interne à la carte 11 et assurant les échanges locaux des signaux d'adresse, de commande et de données. Le microprocesseur 23a est relié par le bus 11a à un bloc 26 servant à la gestion des entrées/sorties de la carte 11 par l'intermédiaire des broches 21a et des contacts 22 correspondants. En particulier, il communique, par l'intermédiaire de liaisons 27a (une seule étant illustrée à titre indicatif) et de l'interface 13, avec un processeur d'administration 28 (tel qu'un ordinateur personnel) local ou distant de la plate-forme 10, qui permet à un utilisateur, administrateur de la plate-forme 10, de recevoir les données d'administration générées par la carte 11 et d'émettre en conséquence les ordres d'administration et de maintenance. Dans la carte de gestion 11, le microprocesseur 23a est aussi connecté à un bloc 29 d'initialisation de la carte 11. Le bloc d'initialisation 29 a aussi une entrée pour recevoir les potentiels d'alimentation du convertisseur secondaire de veille 18b. Le bloc d'initialisation 29 est relié à un dispositif 29a de démarrage à froid (cold reset), correspondant à un démarrage normal après arrêt complet et régulier de la carte 11, et, par l'intermédiaire du microprocesseur 23a, à un dispositif 29b de démarrage à chaud (warm reset) de la carte 11. Le dispositif 29b a ordinairement une partie matérielle sous forme d'un bouton de commande à l'usage d'un utilisateur pour l'interruption du fonctionnement de la carte 11 et une partie logicielle pour le démarrage à chaud. Il est aussi relié à un registre 29c d'état de remise à zéro (Reset Status Register) incorporé dans le microprocesseur 23a et dont le contenu sera appelé REG. Les dispositif 29a n'a pas de bouton matériel de commande. Cependant, les deux dispositifs 29a et 29b ont été représentés sur la figure 1 sous forme de boutons pour suggérer leur fonction.

Dans la carte 11, le microprocesseur 23a est aussi connecté à un dispositif 30a de détection et d'avertissement d'une panne de fonctionnement de la carte 11. Le dispositif 30a choisi et illustré est un ensemble de diodes électroluminescentes disposées sur la face avant de la carte 11, qui émet par exemple une lumière clignotante en fonctionnement normal et qui s'arrête de clignoter lorsque le système d'exploitation 25a de la carte 11 ne peut plus fonctionner correctement. Le dispositif 30a peut aussi être prévu sur l'interface 13. L'arrêt du système d'exploitation 25a peut aussi être alternativement ou conjointement détecté, par l'intermédiaire du bloc de gestion 26, par un dispositif 30b de veille (watchdog timer) situé à l'extérieur de la carte de gestion 11, en l'occurrence sur la carte mère 12a. Le déclenchement du dispositif de veille 30b permet à l'administrateur d'être averti de toute défaillance par un signal, en l'occurrence lumineux comme le dispositif 30a, placé sur la carte mère 12a ou sur l'interface 13, et permet à la plate-forme 10 de passer en un mode de fonctionnement dégradé. Par exemple, le mode dégradé peut commander au système de refroidissement de passer en régime maximal, permettant la protection thermique des circuits du système au simple coût d'un niveau acoustique plus élevé qu'en régime normal.

Une première fonction d'une carte de gestion est d'envoyer aux convertisseurs secondaires 17 et 18 des signaux 31 de commande d'état d'alimentation, qui déterminent notamment l'état d'arrêt et divers états de fonctionnement représentatifs de valeurs des potentiels d'alimentation que doivent fournir les convertisseurs secondaires 17 et 18. Les signaux de commande 31 sont générés par le processeur de service 23a et sont mémorisés de façon classique dans le bloc 26. Une seconde fonction d'une carte de gestion est de recevoir et mémoriser des signaux 32 d'état d'alimentation générés par les convertisseurs secondaires 17 et 18. Les signaux d'état 32 sont représentatifs des états de fonctionnement des convertisseurs correspondants 17 et 18 et servent à la carte de gestion à vérifier s'ils fonctionnement bien et, en cas de défaillance, à alerter le processeur d'administration 28. Dans une carte 11 classique, les signaux 31 et 32 sont couramment mémorisés dans le bloc 26 dans des ports d'entrée/sortie sous forme de circuits intégrés de technologie CMOS (Complementary Metal-Oxide-Silicon).

Dans la carte de gestion 11 conforme à l'invention, les signaux de commande d'état 31 et les signaux d'état 32 sont mémorisés à l'extérieur de la carte. En particulier, les signaux 31 sont mémorisés dans un bloc 33, en l'occurrence disposé sur la carte mère 12a. En outre, le bloc 33 est alimenté en énergie électrique par les potentiels permanents de veille U0, U1 qui sont fournis par le convertisseur primaire 16 et assurent la sauvegarde des signaux 31 et 32 lorsque la carte 11 est déconnectée de la carte mère 12a et/ou en cas de coupure des potentiels Ua et Ub. Dans le bloc 33, les ports d'entrée/sortie de l'exemple choisi portent la référence PCF 8574 et sont décrits dans le document 9397-750-01758 de la société Philips. Ces ports présentent l'avantage de consommer peu d'énergie, d'être peu encombrants et de permettre une distribution facile des signaux 31 et 32. Les signaux 31 et 32 transitent entre le bloc 33 et la carte de gestion 11 par l'intermédiaire de liaisons 34 de transmission de données en série. Les liaisons 34 sont constituées dans l'exemple illustré de segments de bus connus sous le nom I2C™ (Inter-Integrated Circuit) de la société Philips Semiconductor, utilisés pour connecter des circuits intégrés. Ce bus a un fil d'horloge et un fil pour l'échange bidirectionnel des données. Cependant, pour la clarté de la description et pour la généralité de l'invention, les signaux 31 et 32 illustrés transitent sur des fils différents. Les commandes d'état d'alimentation définies par le microprocesseur 23a sont appliquées à un contrôleur 35 de bus série I2C, qui transmet en conséquence les signaux de commande d'état 31 par les liaisons série 34 au bloc 33 par l'intermédiaire d'un bloc 36 multiplexeur / démultiplexeur commandé par le bloc 26 par l'intermédiaire d'un groupe de signaux 27b. Le bloc 36 reçoit aussi les signaux d'état 32 et les transmet au contrôleur 35. D'autres types de bus couramment utilisés dans les environnements des cartes de l'informatique industrielle peuvent aussi être appliqués. Des liaisons 34 servent aussi à transmettre les signaux 31 et 32 entre le bloc 36 et le convertisseur secondaire de puissance 17. Enfin, la carte 11 incorpore un détecteur 37 d'insertion à chaud de la carte de gestion 11.

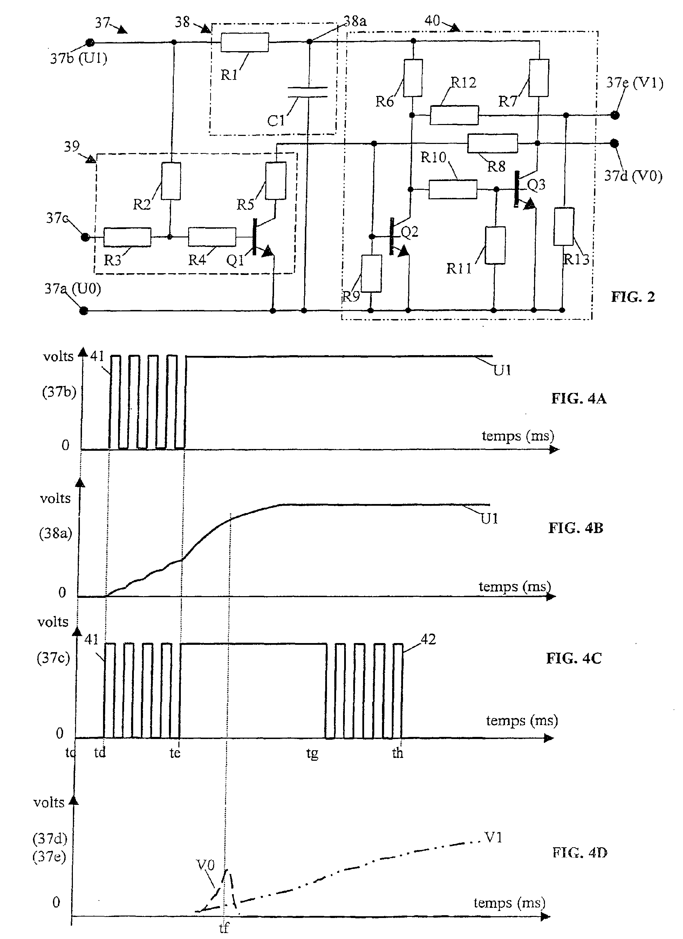

La figure 2 illustre un exemple de circuit constituant le détecteur 37. Le détecteur 37 est inclus dans la carte 11 et a trois bornes d'entrée 37a, 37b et 37c connectées respectivement aux trois broches 21b, 21c et 21d. Les bornes d'entrée 37a et 37b représentent respectivement le potentiel de masse U0 et potentiel d'alimentation U1. Le détecteur 37 délivre sur deux bornes de sortie 37d et 37e deux tensions de sortie respectives V0 et V1. Seule la borne de sortie 37e fournissant le signal V1 est utilisée et est appliquée à l'entrée du bloc 26 de gestion des entrées / sorties de la carte 11. L'autre borne de sortie 37d et son signal de sortie V0 ne servent qu'à illustrer le fonctionnement du détecteur 37. La borne d'entrée 37b est connectée à un filtre passe-bas 38 formé par une résistance R1 en série avec un condensateur C1 connecté à la masse. La jonction R1-C1 constitue la borne de sortie 38a du filtre 38. La borne d'entrée 37c est connectée à un étage d'entrée 39 comprenant un transistor bipolaire Q1 et quatre résistances R2-R5. Les bornes d'entrée 37b et 37c sont connectées entre elles par l'intermédiaire des deux résistances R2 et R3 en série. Le transistor Q1 a sa base reliée par la résistance R4 à la jonction des résistances R2 et R3, son émetteur est à la masse et son collecteur est connecté à une première extrémité d'une résistance R5. Le détecteur inclut aussi une bascule 40 connectée à la borne de sortie 38a du filtre 38 et à l'étage d'entrée 39 et constituée à partir de deux transistors bipolaires Q2 et Q3 ayant leurs émetteurs à la masse. Les trois transistors Q1-Q3 sont du type NPN, par exemple ceux répertoriés 2N2222. Les collecteurs des transistors Q2 et Q3 sont connectés par deux résistances de charge respectives R6 et R7 à la borne de sortie 38a du filtre passe-bas 38. La base du transistor Q2 est connectée à la seconde extrémité de la résistance R5 et à la jonction de deux résistances R8 et R9 montées en série entre le collecteur du transistor Q3 et la masse. La base du transistor Q3 est connectée à la jonction de deux résistances R10 et R11 montées en série entre le collecteur du transistor Q2 et la masse. Le potentiel au collecteur du transistor Q3 est appliqué sur la borne de sortie 37d et délivre un potentiel V0 de sortie de la bascule 40 et du détecteur 37. La borne de sortie 31e du détecteur 31 est connectée à la jonction de deux résistances R12 et R13 montées en série entre le collecteur du transistor Q2 et la masse et fournit un potentiel V1 de sortie du détecteur 37. Dans l'exemple de réalisation, les valeurs des résistances (en ordre décroissant) et de la capacité de C1 sont les suivantes :

| | |
|---|---|
| R12 = 100 kΩ | R13 = 47 kΩ |
| R9 = R10 = 22,1 kΩ | R4 = R6 = R7 = R8 = R11 = 10 kΩ |
| R2 = R5 = 4,75 kΩ | R1 = 100 Ω |
| R3 = 47 Ω | C1 =10 µF |

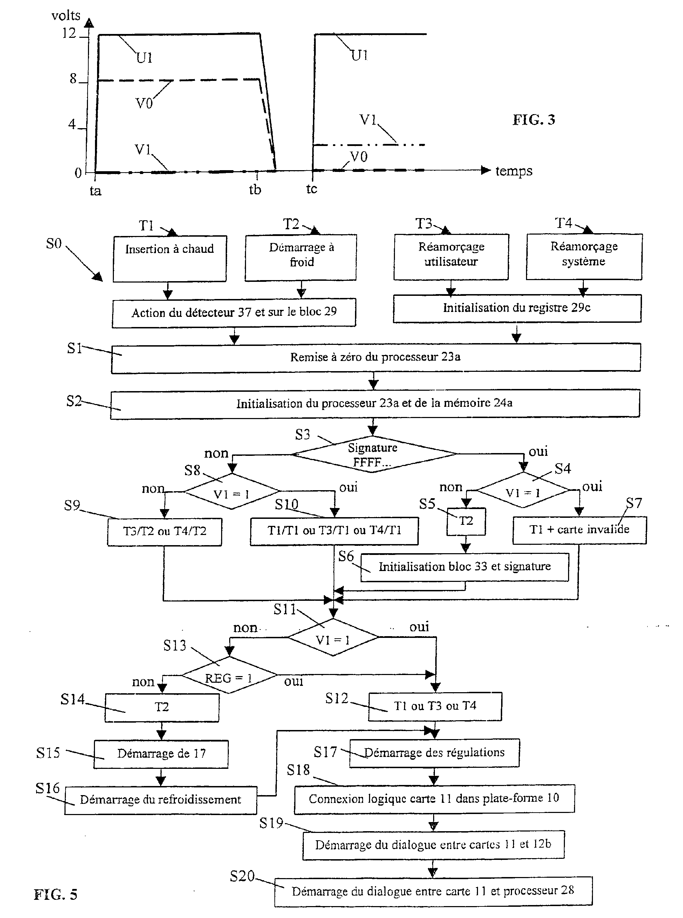

La figure 3 est un graphe dont l'axe des abscisses représente le temps t et l'axe des ordonnées est représentatif de potentiels en volts, représentés en traits gras et relatifs au détecteur 37, à savoir le potentiel (en trait plein) à la borne d'entrée 37b et les potentiels V0 (trait discontinu) et V1 (trait fantôme) aux bornes respectives 37d et 37e. Avant un instant ta, on considère le cas normal dans lequel la plate-forme 10 est à l'état d'arrêt complet (l'interrupteur 15 est ouvert) et les cartes 11 et 12b sont connectées à la carte mère 12a. À l'instant ta, la plate-forme 10 est mise en marche par actionnement du bouton 15a pour fermer l'interrupteur 15. Les bornes d'entrée 37a et 37c prennent le potentiel U0 (la masse) et la borne d'entrée 37b prend le potentiel haut U1, de 12 volts dans l'exemple considéré. Ce cas correspond à un démarrage à froid de la carte de gestion 11. À l'instant ta, les potentiels aux bornes d'entrée 37c et 37b sont directement U0 et U1. Le rapport des valeurs des résistances R2/R3 entre les bornes 37b et 37c est en l'occurrence égal à 100 et fait que le potentiel à la base du transistor Q1 est très inférieur au seuil de tension base-émetteur (ordinairement de l'ordre de 600 millivolts) nécessaire au déclenchement de conduction d'un transistor bipolaire. Le transistor Q1 est donc toujours maintenu à l'état bloqué et aucun courant ne circule dans la résistance R5. La polarisation du transistor Q2 est donc seulement fournie par les résistances R7, R8 et R9 tandis que la polarisation du transistor Q3 est fournie par les résistances R6, R10 et R11. La bascule 40 est de conception classique, de type RS (Reset, Set). Il est à noter que si les transistors Q2 et Q3 avaient les mêmes potentiels de polarisation, la bascule 40 serait symétrique. Dans ce cas, l'état initial que prendraient les valeurs complémentaires des tensions V0 et V1 serait indéterminé lors d'un démarrage à froid. Par exemple, l'état logique de V0 pourrait être 0 ou 1, et aucune prédiction ne pourrait être faite. Dans la bascule 40 illustrée dans la figure 2, la valeur de la résistance R9 (22,1 kΩ) est supérieure à celle de la résistance R11 (10 kΩ), de sorte que le transistor Q2 atteint son seuil de conduction avant le transistor Q3. La bascule 40 s'initialise donc à l'état logique 1 du potentiel V0, qui correspond à la valeur 8 volts dans la figure 3, tandis que le potentiel V1 reste celui de la masse. En d'autres termes, la dissymétrie des polarisations qui est causée par des valeurs différentes des résistances R9 et R11 détermine l'état initial de V0 à l'état logique 1 lors d'un démarrage à froid de la carte 11.

En référence à la figure 3, on suppose maintenant qu'une défaillance de la carte de gestion 11 est signalée à l'administrateur par au moins l'un des dispositifs d'avertissement 30a, 30b. À un instant tb, la carte défaillante 11 est déconnectée, de sorte que les potentiels U1 et V0 chutent.

Pour procéder à la désinsertion de la carte 11, aucune procédure particulière n'est à exécuter. Il suffit de déconnecter la carte 11 du fond de panier 20a. Si la panne affecte l'alimentation de la carte 11, des sécurités internes à la carte 11 coupent l'arrivée de l'énergie et la carte est considérée comme hors tension. Les signaux 31 de commande d'état d'alimentation sont mémorisés dans le bloc 33 dont la source d'énergie est indépendante du reste des circuits de la carte 11 et ne sont donc pas affectés par l'arrêt de alimentation de la carte 11. Les signaux 32 d'état d'alimentation sont mémorisés dans les convertisseurs 16, 17 et 18a. Si la panne affecte un circuit logique ou une mémoire de la carte 11, le microprocesseur 23a peut être mis en état de blocage (dead-lock) par suite de la panne ou d'une commande du système d'exploitation 25a ou, si le microprocesseur 23a est actif, le système d'exploitation 25a peut avoir choisi d'arrêter l'exécution du noyau (kernel). Dans ces deux cas, la mise en sécurité s'effectue de la façon déjà décrite. Au moment de la désinsertion de la carte 11, la connexion successive des broches suffit à couper proprement l'alimentation de la carte 11. D'autre part, des interrupteurs électroniques (non illustrés) pourraient être installés sur la carte mère 12a pour assurer un isolement logique de la carte 11 vis à vis des autres circuits pendant la phase d'insertion, comme cela a été décrit en introduction de la présente demande. Après l'insertion à chaud de la carte 11, le système d'exploitation 25a commanderait la fermeture de ces interrupteurs lorsque l'état de l'initialisation de la carte le permettrait.

On suppose qu'à un instant tc une nouvelle carte 11 est insérée à chaud dans le connecteur 20. Les potentiels illustrés sont schématiques et leurs rapports ne traduisent pas la réalité, les figures 4A-4C ne servant qu'à titre indicatif pour l'homme du métier. L'insertion de la nouvelle carte 11 à l'instant tc commence par la connexion de la broche longue 21b au potentiel de masse U0. À l'instant tc, la borne d'entrée 37a du détecteur 37, qui est connectée à la broche de masse 21b, prend donc le potentiel de masse U0.

Les figures 4A-4D sont des graphes dont l'axe des abscisses représente le temps en millisecondes (ms) et l'axe des ordonnées est représentatif de potentiels (en volts) relatifs respectivement aux bornes 37b, 38a, 37c et 37d, 37e du détecteur 37 représenté sur la figure 2. Pour la simplicité des dessins, les formes d'onde illustrées ne respectent pas les valeurs réelles mais suffisent pour faire comprendre à l'homme du métier le fonctionnement du détecteur 37. L'insertion de la carte 11 se fait ordinairement en faisant glisser à la main la carte 11 le long du rail 19. La vitesse d'insertion est donc lente, par exemple de l'ordre de quelques millimètres par milliseconde. Par conséquent, à un instant td très proche de l'instant tc, la broche moyenne 21c entre dans le contact correspondant 22 représentatif du potentiel U1. Le potentiel de la broche moyenne 21c s'établit au potentiel U1 à un instant te. Comme représenté sur la figure 4A, la période [td,te] est connue sous le nom de période transitoire d'établissement de potentiel, pendant laquelle des signaux transitoires 41, sous forme d'oscillations parasites de grande amplitude, apparaissent sur la borne 37b. Pour la simplicité des dessins, la figure 4A indique seulement la présence de ces oscillations sans tenir compte de leurs valeurs par rapport au potentiel U1.

Pendant la période [td,te], les signaux transitoires 41 sont filtrés par le filtre 38, dont la période de temps choisie est de 1 ms, comme représenté sur la figure 4B. Le filtre 38 assure que le potentiel d'alimentation U1 de la bascule 40 ne va pas être perturbé pour fausser l'établissement de l'état initial de la bascule 40 lors de la connexion à chaud. Sur la figure 4B, on voit que le potentiel fourni à la bascule 40 croît de façon sensiblement linéaire de 0 volt à une valeur inférieure à celle du potentiel U1 pendant la période [td,te] et atteint selon une courbe exponentielle la valeur U1 à un instant proche de l'instant te.

La figure 4C illustre la forme d'onde du potentiel à la borne d'entrée 37c du détecteur 37. Pendant la période [td,te], la borne d'entrée 37c n'est pas encore connectée. Par conséquent, les potentiels à la borne 37c et à la base du transistor Q1 suivent le potentiel de la borne 37b dans des rapports déterminés par les résistances R2 et R4 et par l'impédance d'entrée du transistor Q1. En particulier, le potentiel de la borne 37c est environ égal à la moitié de celui de la borne 37b dans l'exemple choisi. Le transistor Q1 conduit donc sensiblement au même rythme que les oscillations 42. Après l'instant te, la borne 37c n'est pas encore connectée au potentiel de masse et le potentiel s'établit donc à une valeur sensiblement égale à la moitié du potentiel U1 de la borne 37b. Le transistor Q1 s'établit donc aussi dans son état conducteur.

La figure 4D illustre les variations des potentiels aux bornes de sortie 37d et 37e. Après l'instant te, la conduction du transistor Q1 et la croissance du potentiel à la borne 38a font que la bascule 40 commence à s'initialiser. On voit sur la figure 4D que le potentiel V0 commence par croître comme à partir de l'instant ta, et il croît tant que les seuils de conduction des transistors Q2 et Q3 ne sont pas atteints. Le courant qui circule dans la résistance R5 abaisse le potentiel à la base du transistor Q2 au-dessous du potentiel à la base du transistor Q3. À un instant tf, le potentiel V0 chute tandis que le potentiel V1 continue à s'établir à son état logique 1. L'instant tf correspond donc au verrouillage de la bascule 40 dans l'état logique initial (V0 = 0, V1 = 1) correspondant à l'insertion à chaud de la carte 11.

En continuant de pousser la carte 11 pour son insertion dans le connecteur 20, la broche courte 21d entre dans le contact correspondant 22 pour se connecter au potentiel de masse U0 à un instant tg. À l'instant tg, la connexion de la broche courte 21d à la masse crée des signaux transitoires 42 (voir figure 4C) pendant une période d'établissement transitoire de potentiel de la borne 37c vers le potentiel de masse U0. Les signaux transitoires 42 sont de même nature que les signaux transitoires 41 illustrés dans la figure 4A. Les oscillations des signaux transitoires 42 sont appliquées sur la base du transistor Q1 à l'instant tg qui est postérieur à l'instant tf de verrouillage de l'état initial de la bascule et qui ne peuvent plus agir sur ce verrouillage. Les conditions de polarisation des transistors Q2 et Q3 garantissent que le courant collecteur du transistor Q1 ne permet plus de modifier l'état de la bascule. À un instant th représenté sur la figure 4C, les signaux transitoires 42 se terminent et la borne d'entrée 37c s'établit au potentiel de la masse, de sorte que le transistor Q1 se bloque définitivement tandis que la bascule 40 s'établit à son état initial correspondant à l'état logique 1 du potentiel de sortie V1, qui est d'environ 3 volts dans l'exemple illustré dans la figure 3. Le potentiel V1 est appliqué au bloc 26 pour permettre au logiciel d'exploitation 25a d'initialiser la carte 11 selon que la carte 11 a été insérée à chaud ou non.

Il est à noter que l'instant de verrouillage tf de la bascule 40 doit précéder l'instant tg de la connexion électrique de la broche courte 21d avec le contact de masse 22 correspondant. On comprend que si tf >tg, le transistor Q1 ne conduirait plus de façon continue et la bascule 40 se mettrait à son état initial prédéterminé, comme pendant la période [ta,tb]. La durée [tf,tg] est comprise dans la durée [td,tg]. L'instant tf pourrait se produire avant l'instant te si on filtrait le courant de base du transistor Q1 pour que le courant dans son collecteur ne s'annule pas pendant la durée [td,te]. La durée [td,tg] est déterminée notamment par la vitesse de déplacement de la carte 11 sur son rail 19 et par la différence de longueur entre la broche moyenne 21c et la broche courte 21d. Dans l'exemple choisi, la différence de longueur entre broches est de 2 mm et comme le déplacement normal est d'environ 0,5 mètre à la seconde, la durée [td,tg] est de l'ordre de 4 ms. La connexion des broches logiques 21a a lieu en dernier et peut aussi créer des signaux transitoires parasites. De préférence, lors de l'insertion de la carte, le fonctionnement du bloc multiplexeur 36 est prédéterminé pour être bloqué par les signaux 27b issus du bloc 26 afin d'éviter qu'il reçoive des signaux parasites lors de la connexion de la carte.

La figure 5 est un organigramme illustrant un exemple de procédé d'initialisation pouvant être mis en oeuvre par la carte de gestion 11. Le procédé illustré commence par une étape S0 comprenant quatre transitions T1-T4. La transition T1 correspond à l'insertion à chaud de la carte 11 et les trois transitions ordinaires T2, T3, T4 correspondent aux trois démarrages couramment prévus pour toute plate-forme. La transition T2 correspond au démarrage à froid de la carte 11 dans la plate-forme 10, comme celui qui a été décrit en référence à la figure 3 à partir de l'instant ta. Les transitions T1 et T2 sont reconnues par le détecteur 37 et le code exécutable qui lui est dédié dans le système d'exploitation 25a. Les transitions T1 et T2 ont aussi une action sur le bloc 29 d'initialisation par l'intermédiaire du convertisseur secondaire de veille 18b. Le bloc 29 peut être un circuit classique. Dans l'exemple choisi, le bloc 29 est un boîtier de type TLC7733 de la société Texas Instruments. C'est principalement un temporisateur qui, pendant le temps de stabilisation du convertisseur d'alimentation 18b (habituellement, quelques dizaines ou centaines de millisecondes), force à l'état bas le signal de remise à zéro de la carte 11, qui fait partie des signaux de commande circulant sur le bus 11a. La particularité du circuit choisi est qu'il est calculé pour fonctionner de manière fiable pendant les signaux transitoires 41 de sa propre alimentation 18b. D'autre part, la transition T3 se produit sur demande d'un utilisateur d'un réamorçage (rebooting) de la plate-forme, ordinairement en appuyant sur le bouton 29b de redémarrage à chaud (warm reset). La transition T4 correspond à un réamorçage demandé par le système d'exploitation 25a et se produit lors de la détection d'un blocage ou d'une panne fatale (dead-lock) du système d'exploitation, la détection étant assurée couramment par un temporisateur de veille (watchdog timer) intégré dans le microprocesseur 23a. Lors des transitions T3 et T4, la cause du réamorçage est mémorisée dans le registre 29c du microprocesseur 23a de la carte 11.

Dans une étape S1, les quatre transitions T1-T4 opèrent une remise à zéro du processeur de service 23a de la carte 11. En outre, la transition T2 opère une remise à zéro des autres processeurs de la plate-forme 10. Ces transitions peuvent durer diversement. Seul le cas de la carte de gestion 11 sera considéré par la suite.

Au commencement de l'initialisation, le processeur de service 23a puis les moyens de mémoire 24a sont initialisés lors d'une étape S2. Un test, lors d'une étape S3, permet d'estimer quelle a été la dernière transition, afin d'effectuer l'initialisation adaptée à la transition détectée. Ce test se sert d'une signature comme référence. Dans l'exemple choisi, la signature du test se fonde sur les signaux 31 de commande d'état d'alimentation qui ont été mémorisés dans les ports inclus dans le bloc 33 et qui sont détectés au cours du test de l'étape S2. Lors d'un démarrage à froid (transition T2), tous les signaux 31 de commande d'état d'alimentation sont couramment mis à l'état logique 1, correspondant à la valeur F en logique hexadécimale. Le test de l'étape S3 vérifie donc si tous les états ont la valeur F. Si oui, il existe encore deux solutions, qui sont déterminées lors d'une étape S4 selon que la valeur logique du potentiel de sortie V1 du détecteur 37 est 0 ou 1. Lors du test de l'étape S4, si V1 = 0, une étape S5 signifie qu'il s'agit bien d'un démarrage à froid (transition T2). On a vu que cette transition conduit à une étape S6 d'initialisation du bloc 33 et de la signature à la valeur F. Si V1 = 1, le détecteur 37 signale dans une étape S7 qu'une insertion à chaud a été faite et le test de l'étape S4 indique qu'il correspond à un démarrage à froid, ce qui signifie en pratique que la carte 11 qui a été insérée à chaud ne fonctionnait pas (carte invalide). Ce cas, rare mais possible, peut être détecté grâce au procédé de invention selon exemple choisi. Dans les deux cas résultant du test S4, les signaux de commande d'état d'alimentation 31 sont initialisés à leurs valeurs opérationnelles, qui sont déterminées par le microprocesseur 23a et peuvent être différentes de F.

En revenant au test de l'étape S3, la présence d'au moins une valeur logique à 0 dans la signature indique que le démarrage est autre qu'un démarrage à froid et que le démarrage à chaud peut être dû à une transition T1, T3 ou T4. Par exemple, on a vu plus haut que le bloc 33 reste sous tension lors de l'insertion à chaud de la carte 11, de sorte que les états ont été changés par le microprocesseur 23a pour avoir la configuration choisie dans une période donnée. Lors d'une transition T3 ou T4, généralement très brève, les valeurs que les états avaient lors de l'interruption du fonctionnement de la plate-forme 10 peuvent être encore détectés lors de l'initialisation qui suit. Un test lors d'une étape S8 permet de distinguer les transitions T1, T3 et T4 selon la valeur logique du signal V1 de sortie du détecteur 37. Si V1 = 0, une étape S9 indique qu'une transition T2 représentative d'un démarrage à froid a été suivie d'une transition T3 ou T4. Si V1 = 1, une étape S10 indique qu'une transition T1 s'est produite pour l'insertion à chaud de la carte 11, suivie ou non d'une transition T3 ou T4.

Selon le procédé représenté sur la figure 5, les étapes S6, S7, S9 et S10 convergent vers une étape S11 comprenant un test fondé encore sur la valeur de V1. Si V1 = 1, le test indique dans une étape S12 que la transition correspond à un démarrage à chaud (transition T1, T3 ou T4). Si V1 = 0, il s'agit d'un démarrage à froid qui peut être suivi, comme on l'a vu à l'étape S9, d'un réamorçage à chaud dû à une transition T3 ou T4. Pour distinguer ces deux cas, un test lors d'une étape S13 vérifie si le contenu REG du registre 29c est vide (état logique 0) ou non (état logique 1). Si REG = 1, un réamorçage à chaud a suivi un démarrage à froid, de sorte que le l'étape S13 conduit à l'étape S12. Si REG = 0, le test assure, lors d'une étape S14, que seule une transition T2 s'est produite. Dans ce cas, les signaux 31 de commande d'état d'alimentation du convertisseur secondaire d'exploitation 17 sont initialisés lors d'une étape S15 et le refroidissement de la plate-forme démarre lors d'une étape S16. L'étape S16 conduit au début d'une étape S17 qui suit l'étape S12 relative à un démarrage à chaud. L'étape S17 fait redémarrer les régulations de processus, remettant ainsi_en mode normal le refroidissement s'il avait été mis en mode dégradé. L'étape S17 conduit à une étape S18 de connexion logique de la carte de gestion 11 dans la plate-forme 10 et aux éventuelles autres cartes de gestion dans la plate-forme ou système 10. Puis, dans une étape S19 a lieu le démarrage du dialogue entre la carte de gestion 11 et la carte gérée 12b. Au cours de ce démarrage sont configurées les liaisons logicielles entre le système d'exploitation 25a de la carte 11 et le logiciel, connu sous l'abréviation BIOS (Basic Input Output System) et le système d'exploitation 25b de la carte d'exploitation 12b. Un processus de dialogue entre la carte 11 et le processeur d'administration 28 dans une étape S20 termine le procédé d'initialisation de la carte 11 dans la plate-forme 10. À ce moment là, quelques secondes après l'insertion à chaud, la carte 11 est opérationnelle pour gérer à nouveau la plate-forme 10. Les messages, tels que les signaux 32 d'état d'alimentation qui auraient pu être échangés avec son environnement pendant la période d'indisponibilité de la carte, peuvent être stockés dans des mémoires tampons du bloc 33 pour servir au moment de la réinitialisation.

Il ressort de ce qui précède que l'adaptation simple et avantageuse de l'invention à l'insertion à chaud de la carte de gestion 11 d'un grand système informatique 10 est due en particulier à l'utilisation des signaux transitoires 41 et 42 détectés lors de l'insertion à chaud de la carte pour générer un état logique binaire (V1 = 1) représentatif de l'insertion à chaud de la carte. Cet état stable peut donc servir à rendre de façon fiable la carte 11 opérationnelle dans le système 10 tout en maintenant le fonctionnement du reste du système. La stabilité de cet état peut ne durer que pour l'initialisation de la carte. Cette caractéristique de l'invention peut évidemment servir à d'autres types de cartes électroniques qu'une carte de gestion d'un grand système, la carte 12b par exemple. Bien que cette caractéristique soit utilisée pour l'initialisation d'une carte à microprocesseur, il ressort à l'évidence de la description de l'exemple illustré qu'elle pourrait aussi bien servir à rendre opérationnelle toute carte électronique.

D'une manière générale, l'invention a donc pour objet un procédé de gestion de l'insertion à chaud d'une carte électronique 11 dans un système 10, comprenant la connexion successive de la carte à deux potentiels d'alimentation U0, U1 disponibles dans un connecteur 20 de façon à obtenir des signaux transitoires de connexion 41, 42 lors de l'insertion à chaud de la carte, la détection des signaux transitoires pour fournir un signal binaire V1 dont un état binaire 1 est représentatif de l'insertion à chaud de la carte et l'utilisation de cet état binaire pour rendre la carte opérationnelle dans le système.

Dans l'exemple illustré, la connexion successive est faite par des broches 21b-21d de longueurs différentes, montées sur la carte pour entrer dans des contacts correspondants 22. Cependant, il est évident que la structure inverse produirait aussi une connexion successive et que d'autres formes de réalisation sont possibles. L'option décrite et illustrée pour la connexion successive peut donc être généralisée en disant que la connexion successive de la carte comprend l'utilisation d'éléments de connexion de trois longueurs différentes 21b-21d, deux d'entre elles 21b, 21d servant à la connexion à l'un des deux potentiels d'alimentation et deux 21c, 21d servant à l'obtention des signaux transitoires de connexion 41 et 42.

La détection des signaux transitoires pour former un état logique binaire correspondant à l'insertion à chaud n'est évidemment pas limitée à l'exemple décrit et illustré en référence à la figure 2. L'exemple choisi a l'avantage d'être simple et efficace. Selon cet exemple, la détection du signal transitoire 41 se fait à partir d'une bascule logique 40 alimentée lors de la connexion de la carte aux potentiels U0 et U1, en générant une dissymétrie (R7, R8, R9 / R6, R10, R11 ; 39) réglable selon la présence ou non des signaux transitoires, pour initialiser la bascule à un premier état logique V1 = 0 lorsque la carte est montée sur le connecteur lors d'un démarrage à froid de la carte et au second état logique V1 = 1 en réponse aux signaux transitoires lors de l'insertion à chaud de la carte.

Dans le cas où la carte incorpore au moins un microprocesseur 23a, on a vu que l'état du signal binaire (V1) peut servir à l'initialisation des fonctions de la carte au moyen du microprocesseur. Dans l'exemple illustré, ce type de carte assure la gestion d'au moins une partie du système 10 et détermine, par des signaux 31 de commande des états d'alimentation dans ladite partie du système. Le procédé illustré comprend, préalablement à l'insertion à chaud de la carte 11, le stockage dans le bloc 33, extérieur à la carte 11, des signaux 31 de commande des états d'alimentation.

Dans l'exemple décrit et illustré, l'initialisation de la carte comprend la détection d'au moins une partie des signaux 31 de commande d'états d'alimentation et la comparaison avec des valeurs prédéterminées FFFF... des états d'alimentation pour la détermination d'une signature représentative du démarrage à froid ou de l'insertion à chaud de la carte dans le système. Cependant, il est évident que d'autres types de signatures peuvent être impliqués pour rendre opérationnelle la carte. En outre, une signature n'est pas nécessaire mais peut s'avérer très avantageuse, comme dans l'exemple illustré. Plus généralement, l'utilisation de l'état binaire du signal binaire V1 peut donc inclure la détermination d'une signature représentative du démarrage à froid ou de l'insertion à chaud de la carte dans le système.

L'invention a aussi pour objet un détecteur 37 d'insertion à chaud d'une carte électronique 11 dans un système 10, comprenant : des moyens 21b-21d de connexion successive de la carte à deux potentiels d'alimentation U0, U1 disponibles dans un connecteur 20 de façon à obtenir des signaux transitoires de connexion 41, 42 lors de l'insertion à chaud de la carte ; et une bascule logique 40 alimentée lors de la connexion de la carte aux potentiels U0, U1 et pourvue de moyens 39 de dissymétrie réglable selon la présence ou non des signaux transitoires, pour initialiser la bascule à un premier état logique V1 = 0 lorsque la carte est montée sur le connecteur lors d'un démarrage à froid de la carte et au second état logique V1 = 1 en réponse aux signaux transitoires lors de l'insertion à chaud de la carte.

Selon l'option choisie, la bascule 40 présente une dissymétrie prédéterminée R7, R8, R9 / R6, R10, R11 et les moyens de dissymétrie réglable 39 maintiennent la dissymétrie prédéterminée lors d'un démarrage à froid de la carte. Dans l'exemple illustré, le pont diviseur résistif R2/R3 assure le blocage du transistor Q1 associé au transistor Q2 qui, dans la bascule 40, est prédéterminé pour être conducteur, en accord avec l'état de dissymétrie prédéterminé. Selon l'option additionnelle choisie, les moyens de dissymétrie réglable 39 réagissent aux signaux transitoires 41, 42 pour inhiber la dissymétrie prédéterminée et créer une dissymétrie inverse de celle prédéterminée. D'autres options sont possibles. Selon l'exemple illustré, le trajet principal de conduction du transistor Q1 est parallèle à une branche de polarisation (formée par la résistance R9) du transistor Q3. Ainsi, les signaux transitoires de connexion déclenchent la conduction du transistor Q1 et bloquent par conséquent la conduction du transistor Q2. Ce blocage inhibe donc la dissymétrie prédéterminée et crée une dissymétrie inverse qui fait conduire le transistor Q3 et génère l'état V1 = 1 représentatif de l'insertion à chaud de la carte 11.

En pratique, le détecteur d'insertion à chaud peut être intégré à très faible coût à un circuit de remise à zéro classique pour microprocesseur, ou à un circuit dédié à la commutation de l'alimentation d'une carte insérable à chaud.

L'invention a pour objet corollaire une carte électronique 11 comprenant des moyens 20b, 21b-21d de connexion de la carte à deux potentiels d'alimentation U0, U1 extérieurs à la carte et des moyens 29, 37 d'insertion à chaud de la carte dans un système qui ont les fonctions définies par le procédé de l'invention ou comprennent un détecteur d'insertion à chaud tel que défini précédemment.

L'invention a aussi pour objet corollaire un système 10 dans lequel au moins une carte 11 peut être insérée à chaud et qui met en oeuvre le procédé de l'invention.

## Revendications

1. Procédé de gestion de l'insertion à chaud d'une carte électronique (11) dans un système (10), la carte incorporant au moins un microprocesseur (23a), ce procédé comprend :
- la connexion successive de la carte à deux potentiels d'alimentation (U0, U1) disponibles dans un connecteur (20) de façon à obtenir des signaux (41, 42) transitoires de connexion lors de l'insertion à chaud de la carte, et est **caractérisé en ce que,**
- la détection des signaux transitoires pour fournir un signal binaire (V1) dans un état binaire (V1 = 1) représentatif de l'insertion à chaud de la carte et l'utilisation dudit état du signal binaire (V1) pour rendre la carte opérationnelle dans le système, la détection des signaux transitoires (41, 42) étant effectuée à partir d'une bascule logique (40) alimentée lors de la connexion de la carte auxdits potentiels, en générant une dissymétrie (R6-R11, 39) des polarisations des transistors formant la bascule logique, réglable selon la présence ou non desdits signaux transitoires, pour initialiser la bascule à un premier état logique (V1 = 0) lorsque la carte est montée sur le connecteur lors d'un démarrage à froid de la carte et au second état logique (V1 = 1) en réponse auxdits signaux transitoires lors de l'insertion à chaud de la carte, et **en ce que**
- l'utilisation dudit état du signal binaire (V1) comprend l'initialisation des fonctions de la carte au moyen du microprocesseur.

2. Procédé selon la revendication 1, **caractérisé en ce que** la connexion successive de la carte comprend l'utilisation d'éléments de connexion de trois longueurs différentes (21b-21d), deux d'entre elles (21b, 21d) servant à la connexion à l'un (U0) des deux potentiels d'alimentation et deux (21c, 21d) servant à l'obtention des signaux transitoires de connexion (41, 42).

3. Procédé selon la revendication 1, **caractérisé en ce que** la carte assure la gestion d'au moins une partie du système (10) et détermine, par des signaux (31) de commande des états d'alimentation dans le système et **en ce que** le procédé comprend, préalablement à l'insertion à chaud de la carte, le stockage (33) à l'extérieur de la carte des signaux de commande des états d'alimentation.

4. Procédé selon la revendication 1 ou 3, **caractérisé en ce que** l'utilisation de l'état binaire du signal binaire (V1) inclut la détermination d'une signature représentative du démarrage à froid ou de l'insertion à chaud de la carte dans le système.

5. Procédé selon la revendication 3, **caractérisé en ce que** l'initialisation de la carte comprend la détection d'au moins une partie desdits signaux (31) de commande d'états d'alimentation et la comparaison avec des valeurs prédéterminées (FFFF...) desdits états d'alimentation pour la détermination d'une signature représentative du démarrage à froid ou de l'insertion à chaud de la carte dans le système.

6. Détecteur (37) d'insertion à chaud d'une carte électronique (11) dans un système (10), comprenant des moyens (21b-21d) de connexion successive de la carte à deux potentiels d'alimentation (U0, U1) disponibles dans un connecteur (20) de façon à obtenir des signaux (41, 42) transitoires de connexion lors de l'insertion à chaud de la carte **caractérisé en ce qu'**il comprend une bascule logique (40) alimentée lors de la connexion de la carte auxdits potentiels et pourvue de moyens (39) générant une dissymétrie des polarisations des transistors formant la bascule logique, réglable selon la présence ou non desdits signaux transitoires, pour initialiser la bascule à un premier état logique (V1 = 0) lorsque la carte est montée sur le connecteur lors d'un démarrage à froid de la carte et au second état logique (V1 = 1) en réponse auxdits signaux transitoires lors de l'insertion à chaud de la carte.

7. Détecteur selon la revendication 6, **caractérisé en ce que** la bascule (40) présente une dissymétrie prédéterminée (R7, R8, R9; R6, R10, R11) et **en ce que** les moyens de dissymétrie réglable (39) maintiennent ladite dissymétrie prédéterminée lors d'un démarrage à froid de la carte.

8. Détecteur selon la revendication 7, **caractérisé en ce que** les moyens de dissymétrie réglable (39) réagissent aux signaux transitoires (41, 42) pour inhiber ladite dissymétrie prédéterminée et créer une dissymétrie inverse de la dissymétrie prédéterminée.

9. Carte électronique (11) comprenant des moyens (20b, 21b-21d) de connexion de la carte à deux potentiels d'alimentation (U0, U1) extérieurs à la carte et des moyens **(29, 37)** d'insertion à chaud de la carte dans un système, **caractérisé en ce que** les moyens d'insertion à chaud ont les fonctions définies dans l'une des revendications 1 à 5 ou comprennent un détecteur d'insertion à chaud tel que défini dans l'une des revendications 6 à 8.

10. Système (10) comprenant au moins une carte (11) pouvant être insérée à chaud dans le système, **caractérisé en ce que** le système met en oeuvre le procédé selon l'une des revendications 1 à 5.

## Claims

1. Method for managing the hot insertion of an electronic card (11) into a system (10), the card incorporating at least one microprocessor (23a), this method comprises:
- the successive connection of the card to two supply voltage potentials (U0, U1) available in a connector (20) so as to obtain transient connection signals (41, 42) during the hot insertion of the card, and is **characterised in that**
- the detection of the transient signals in order to provide a binary signal (V1) in a binary state (V1 = 1) representing the hot insertion of the card and the use of said state of the binary signal (V1) in order to make the card operational in the system, the detection of the transient signals (41, 42) being carried out on the basis of a bistable logic circuit (40) supplied when the card is connected to said voltage potentials, by generating asymmetry (R6-R11, 39) of the polarisations of the transistors forming the bistable logic circuit, adjustable according to the presence or otherwise of said transient signals, in order to initialise the bistable circuit to a first logic state (V1 = 0) when the card is mounted on the connector during a cold reset of the card and to the second logic state (V1 = 1) in response to said transient signals when the card is inserted hot, and **in that**
- the use of said state of the binary signal (V1) comprises the initialisation of the functions of the card by means of the microprocessor.

2. Method according to Claim 1, **characterised in that** the successive connection of the card comprises the use of connection members of three different lengths (21b-21d), two of them (21b, 21d) being used for connection to one (U0) of the two supply voltage potentials and two (21c, 21d) being used to obtain transient connection signals (41,42).

3. Method according to Claim 1, **characterised in that** the card undertakes the management of at least part of the system (10) and determines, through control signals (31), supply status in the system and **in that** the method comprises, prior to the hot insertion of the card, the storage (33) outside the card of the control signals of the supply status.

4. Method according to Claim 1 or 3, **characterised in that** the use of the binary state of the binary signal (V1) includes the determination of a signature representing the cold reset or hot insertion of the card in the system.

5. Method according to Claim 3, **characterised in that** the initialisation of the card comprises the detection of at least part of said control signals (31) of supply status and the comparison with predetermined values (FFFF...) of said supply status for the determination of a signature representing the cold reset or hot insertion of the card in the system.

6. Detector (37) of hot insertion of an electronic card (11) in a system (10), comprising means (21b-21d) for successive connection of the card to two supply voltage potentials (U0, U1) available in a connector (20) so as to obtain transient connection signals (41, 42) when the card is inserted hot, **characterised in that** it comprises a bistable logic circuit (40) supplied when the card is connected to said voltage potentials and provided with means (39) generating asymmetry of the polarisations of the transistors forming the bistable logic circuit, adjustable according to the presence or otherwise of said transient signals, in order to initialise the bistable circuit to a first logic state (V1 = 0) when the card is mounted on the connector during a cold reset of the card and to the second logic state (V1 = 1) in response to said transient signals when the card is inserted hot.

7. Detector according to Claim 6, **characterised in that** the bistable circuit (40) has a predetermined asymmetry (R7, R8, R9; R6, R10, R11) and **in that** the adjustable biasing means (39) maintain said predetermined asymmetry when the card is reset cold.

8. Detector according to Claim 7, **characterised in that** the adjustable biasing means (39) react to the transient signals (41, 42) in order to inhibit said predetermined asymmetry and to create a asymmetry that is the inverse of the predetermined asymmetry,

9. Electronic card (11) comprising means (20b, 21b-21d) for connecting the card to two supply voltage potentials (U0, U1) external to the card and means (29, 37) for hot insertion of the card in a system, **characterised in that** the hot insertion means have the functions defined in one of Claims 1 to 5 or comprise a hot insertion detector as defined in one of Claims 6 to 8.

10. System (10) comprising at least one card (11) that can be inserted hot in the system, **characterised in that** the system implements the method according to one of Claims 1 to 5.

## Patentansprüche

1. Verfahren zur Leitung des Einsetzens einer Elektronik-Karte (11) in ein System (10) während des Betriebes, wobei in die Karte mindestens ein Mikroprozessor (23a) eingebaut ist und wobei dieses Verfahren enthält:
- die sukzessive Verbindung der Karte mit zwei Versorgungspotentialen (U0, U1), die in einem Verbinder (20) zur Verfügung stehen, derart, dass Verbindungs-Übergangs-Signale (41, 42) beim Einsetzen der Karte während des Betriebes erhalten werden, und **dadurch gekennzeichnet ist, dass**
- das Detektieren der Übergangs-Signale erfolgt, um ein binäres Signal (V1) in einem binären Zustand (V1 = 1) bereitzustellen, das repräsentativ ist für das Einsetzen der Karte während des Betriebes, und die Verwendung des genannten Zustands des binären Signals (V1), um die Karte im System in Betrieb zu nehmen, wobei das Detektieren der Übergangs-Signale (41, 42) ausgehend von einer Logik-Kippstufe (40) ausgeführt wird, die bei der Verbindung der Karte mit den genannten Potentialen versorgt wird, wobei eine Unsymmetrie (R6-R11, 39) der Polarisationen der die Logik-Kippstufe bildenden Übergänge erzeugt wird, einstellbar je nach Anwesenheit oder Fehlen der Übergangs-Signale, um die Logik-Kippstufe auf einen ersten, logischen Zustand (V1 = 0) zu initialisieren, wenn die Karte auf den Verbinder montiert wird bei einem Kaltstart der Karte, und auf einen zweiten, logischen Zustand (V1 = 1) als Folge der genannten Übergangs-Signale beim Einsetzen der Karte während des Betriebes, und **dadurch**, dass
- die Verwendung des genannten Zustandes des binären Signals (V1) das Initialisieren der Funktionen der Karte mit Hilfe des Mikroprozessors enthält.

2. Verfahren nach Anspruch 1, **dadurch gekennzeichnet, dass** die sukzessive Verbindung der Karte die Verwendung von Verbindungs-Elementen dreier verschiedener Längen (21b-21d) enthält, wobei zwei (21b, 21d) von ihnen der Verbindung mit einem (U0) der beiden Versorgungs-Potentiale dienen und zwei (21c, 21d) der Erlangung der Verbindungs-Übergangs-Signale (41, 42) dienen.

3. Verfahren nach Anspruch 1, **dadurch gekennzeichnet, dass** die Karte die Leitung mindestens eines Teils des Systems (10) sicherstellt und über Steuerungs-Signale (31) Versorgungs-Zustände im System bestimmt, und **dadurch**, dass das Verfahren, vor dem Einsetzen der Karte während des Betriebes, das Speichern (33) der Steuerungs-Signale der Versorgungs-Zustände außerhalb der Karte enthält.

4. Verfahren nach Anspruch 1 oder 3, **dadurch gekennzeichnet, dass** die Verwendung des binären Signals (V1) die Bestimmung einer Signatur einschließt, die repräsentativ für den Kaltstart oder das Einsetzen der Karte in das System während des Betriebes ist.

5. Verfahren nach Anspruch 3, **gekennzeichnet dadurch, dass** die Initialisierung der Karte das Detektieren mindestens eines Teils der genannten Versorgungs-Zustands-Steuer-Signale (31) enthält und durch den Vergleich der genannten Versorgungs-Zustände mit vorbestimmten Werten (FFFF...) zur Bestimmung einer Signatur, die repräsentativ für den Kaltstart oder das Einsetzen der Karte in das System während des Betriebes ist.

6. Detektor (37) für das Einsetzen einer Elektronik-Karte (11) in ein System (10) während des Betriebes, der Mittel (21b-21d) enthält zur sukzessiven Verbindung der Karte mit zwei Versorgungs-Potentialen (U0, U1), die in einem Verbinder (20) zur Verfügung stehen, derart, dass Verbindungs-Übergangs-Signale (41, 42) beim Einsetzen der Karte während des Betriebes erhalten werden, **dadurch gekennzeichnet, dass** eine Logik-Kippstufe (40), die bei der Verbindung der Karte mit den genannten Potentialen versorgt wird, versehen ist mit Mitteln (39), die eine Unsymmetrie der Polarisationen der die Logik-Kippstufe bildenden Übergänge erzeugen, einstellbar je nach Anwesenheit oder Fehlen der genannten Übergangs-Signale, um die Kippstufe auf einen ersten, logischen Zustand (V1 = 0) zu initialisieren, wenn die Karte bei einem Kaltstart der Karte auf dem Verbinder montiert ist, und auf den zweiten, logischen Zustand (V1 = 1) als Folge der genannten Übergangs-Signale beim Einsetzen der Karte während des Betriebes.

7. Detektor nach Anspruch 6, **dadurch gekennzeichnet, dass** die Kippstufe (40) eine vorbestimmte Unsymmetrie (R7, R8, R9; R6, R10, R11) aufweist, und **dadurch**, dass die einstellbaren Unsymmetrie-Mittel (39) die genannte, vorbestimmte Unsymmetrie bei einem Kaltstart der Karte aufrecht halten.

8. Detektor nach Anspruch 7, **dadurch gekennzeichnet, dass** die einstellbaren Unsymmetrie-Mittel (39) auf die Übergangs-Signale (41, 42) reagieren, um die genannte, vorbestimmte Unsymmetrie zu unterdrücken und eine neue Unsymmetrie zu schaffen, die invers ist zur vorbestimmten Unsymmetrie.

9. Elektronik-Karte (11), die Mittel (20b, 21b-21d) zur Verbindung der Karte mit zwei kartenexternen Versorgungs-Potentialen (U0, U1) enthält und Mittel (29, 37) zum Einsetzen der Karte in ein System während des Betriebes, **dadurch gekennzeichnet, dass** die Mittel zum Einsetzen während des Betriebes die Funktionen besitzen, die in einem der Ansprüche 1 bis 5 definiert sind, oder einen Detektor des Einsetzens der Karte während des Betriebes, wie in einem der Ansprüche 6 bis 8 definiert, enthält.

10. System (10), das mindestens eine Karte (11) enthält, die während des Betriebes in das System eingesetzt werden kann, **dadurch gekennzeichnet, dass** das System das Verfahren nach einem der Ansprüche 1 bis 5 in Gang setzt.
